Europäisches Patentamt

European Patent Office

Office européen des brevets

(11) Publication number: **0 071 409**
**A1**

(12) # EUROPEAN PATENT APPLICATION

(21) Application number: 82303865.8

(22) Date of filing: 22.07.82

(51) Int. Cl.³: **A 01 K 47/00**

(30) Priority: 24.07.81 IL 63403
10.03.82 IL 65218

(43) Date of publication of application:
09.02.83 Bulletin 83/6

(84) Designated Contracting States:
CH DE FR GB IT LI

(71) Applicant: HULIOT PLASTICS INDUSTRY
Kibbutz Sdeh Nehemia
D.N. Upper Galilee 12 245(IL)

(72) Inventor: Zucker, Shlomo
1, Raphaely Street
Jerusalem 94 568(IL)

(74) Representative: Baillie, Iain Cameron et al,
c/o Ladas & Parry Isartorplatz 5
D-8000 München 2(DE)

(54) Modular beehives.

(57) A modular beehive comprising horizontally extending framed honeycomb foundation units (113) secured between hive end units (114) by coupling means (116, 117, 118, 119) to form an element proof horizontally extending structure.

EP 0 071 409 A1

Croydon Printing Company Ltd.

./...

Fig. 1

- 1 -

## MODULAR BEEHIVES

## FIELD OF THE INVENTION

This invention is concerned with apiarian equipment and more particularly to unique modular beehives.

## BACKGROUND OF THE INVENTION

Man first obtained wild honey by removing it from natural beehives in the same way as animals such as bears obtain honey. Subsequently man learned to provide hives for the bees whereby man no longer had to hunt for the beehives. In many parts of the world primitive hives, such as straw skeps which have been used since the time of recorded history are still used. Other early man-provided hives include drums and clay pots sealed on one end with only a narrow opening on the other end. Most of such artificial hives are kept suspended from the limbs of trees away from predators. Although the skeps, log drums and the clay pots are primitive and inefficient, substantial quantities of honey and beeswax are produced from them because of sheer numbers.

It was not until the 1850's that it was discovered that if interior portions of a hive were spaced apart what is known as a "bee space" distance, bees would construct their comb in a uniform manner without brace and bridge combs between inserted honeycomb foundations and thereby enable the inserted parts to be readily interchangeable and movable. Thus finally man learned to provide removable honeycombs.

Based on the discovery of the geometry used by the bees standard hives are now in common use. These hives comprise a hive body in which the honeycomb foundations are suspended. The hive body rests on a bottom board which in turn is usually on a hive stand. It is possible to mount extra honey storage facilities above the beehives. Whether or not the storage facilities are mounted on the hive bodies, an inner cover and an outer cover are used at the top of the beehives for protection from the elements.

Most beehives are made from wood and thus the beehive must be seasonally painted and/or otherwise coated to protect it from rot.

Beehives are used for three principle functions. One is the normal function of honey

**0071409**

gathering. The second is the breeding or raising of the queen bee or bee colonies and the third is the use of the bees for pollenization. Both the breeding and pollenization functions take much less room because fewer parts are required than are required when the hive is used for the regular honey gathering functions. However since the hive bodies are generally standard sizes there has been an inefficient usage of the hive bodies. The large bodies are used for all of the functions, only the number of component parts are changed. To overcome this inefficiency mini-hives are now in use for breeding and/or pollenization purposes. Thus no longer are the hives necessarily standard for the three separate usages.

Further, with the present day standard beehives the apiarist has to remove an outer cover, an inner cover and usually storage space units to get at the honeycombs. He has to remove the entire hive body to obtain access to the bottom board for cleaning and coating purposes for example. Thus there is much wasted effort in maintaining the beehives, in gathering the honey and in breeding of the bees.

The apiarian equipment, at the present time, is more in demand than ever since the bee's honey serves as a useful way of providing more mourishment to a world where large sections are famine struck. The harvesting of honey is

- 4 -                    0071409

relatively inexpensive and with the proper equipment
takes little time and effort. Keeping beehives
provides a synergistic benefit for farmers. The
present heavy use of insecticides in protecting
the crops also removes the prime source of
pollenization for many plants. Keeping bees provides
the required pollenization. There is accordingly a
longfelt need to overcome the problems inherent
in present day apiarian equipment.

SUMMARY OF THE INVENTION

It is accordingly an object of the present
invention to provide new and improved beehives
in which the  above-referred to disadvantages are
substantially reduced or overcome.

According to the present invention unique
beehives for facilitating the work of the apiarists
is provided, said hives comprising:

honeycomb foundation units,

said honeycomb foundation units including
frame means,

said frame means comprising spaced apart
inner and outer frame sections,

hive end units,

coupling means for coupling at least one
honeycomb foundation unit between two end units
to form an element proof modular beehive.

As a feature of the invention said
coupling means comprises overlapping means on
abutting frame sections.

- 5 -

**0071409**

As another embodiment of the invention the abutting frames sections do not overlap, instead modular roof sections cover and element proof the beehive. Thus each of overlapping means aids in mechanically extracting the honey from the honeycombs of the hive.

A further feature of the invention provides honeycomb foundation means wherein the foundation means and said frame means are integral units, that is the honeycomb foundation and the frame are all molded together.

Another feature of the invention provides coupling means including clamps for holding and fastening the frame foundation means together. Alternatively cable means can be used to fasten together the beehive where the modular units have overlapping side lips. The end units and the honeycomb foundation units all adjoin each other in a horizontal direction and each unit stands in a vertical direction making it easy for the beekeeper to separate and/or remove any of the honeycombs or end units from the hive at any time, thus facilitating the honey gathering process and the breeding processes. To this end, the end units as a feature of the invention, combine food storage space and insulation therein.

Means are provided within the modular beehive for restricting the passage of the queen bee from the honeycomb foundation units and thereby eliminating the problem of eggs in the honey. For example, the honeycomb foundation units are dimensioned to prevent passage of the queen through the comb.

There is no real limitation on the size of the beehives. If a bigger beehive is required more modular units are set in place. The modular honeycomb foundation units and roof units are dimensioned and include means for enabling their use in prior art type beehives that extend vertically.

A further feature of the invention utilizes bee portal means for controlling the ingress and egress of the bees thereby enabling the apiarist to empty the beehive at will and with ease.

BRIEF DESCRIPTION OF THE DRAWINGS

The operation and utilization of the present invention will be more fully apparent from the description of preferred embodiments taken in conjunction with the following drawings, in which:

Fig. 1 is an exploded view of the typical prior art beehive presently used today;

Fig. 2 is a pictorial showing of an embodiment of the inventive beehive on a stand;

Fig. 3 is a front view of an end section of the beehive of Fig. 2;

Fig. 4 is a front view of a honeycomb foundation unit of the beehive of Fig. 2;

Fig. 5 is a side view, partially in section, showing a beehive assembled using honeycomb foundation and end units;

Fig. 6 is a pictorial view of an assembled modular beehive in accordance with another embodiment of the invention;

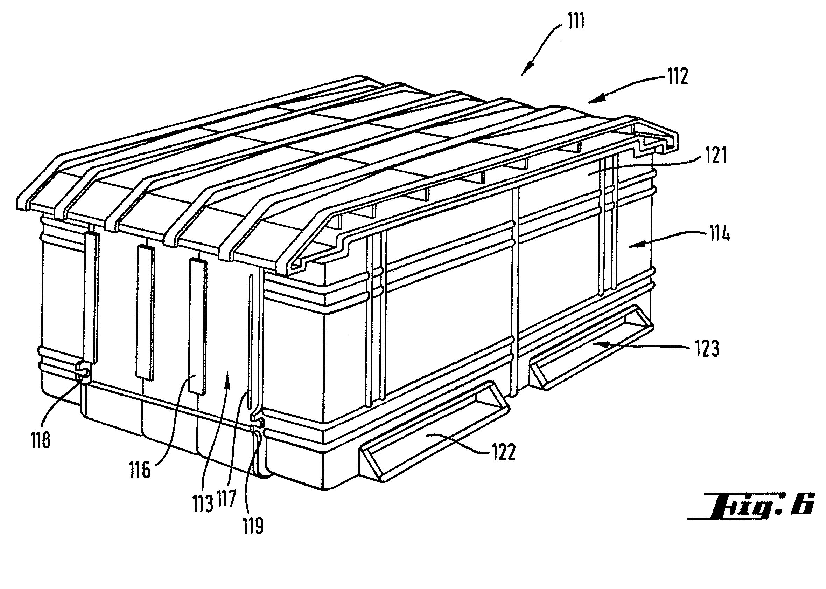

Fig. 7 is an exploded view of the beehive of Fig. 1;

Fig. 8 is a side sectional view of an assembled end unit;

Fig. 9 is a bottom sectional view of the assembly of Fig. 8;

Fig. 10 is a front sectional view of the assembly of Fig. 8;

Fig. 11 is a front view of a single modular roof unit;

Fig. 12 is a side view of the single modular roof unit of Fig. 11;

Fig. 13 is a sectional view of an assembly of modular roof units; and

Fig. 14 is a pictorial showing of a unique bee portal arrangement.

GENERAL DESCRIPTION

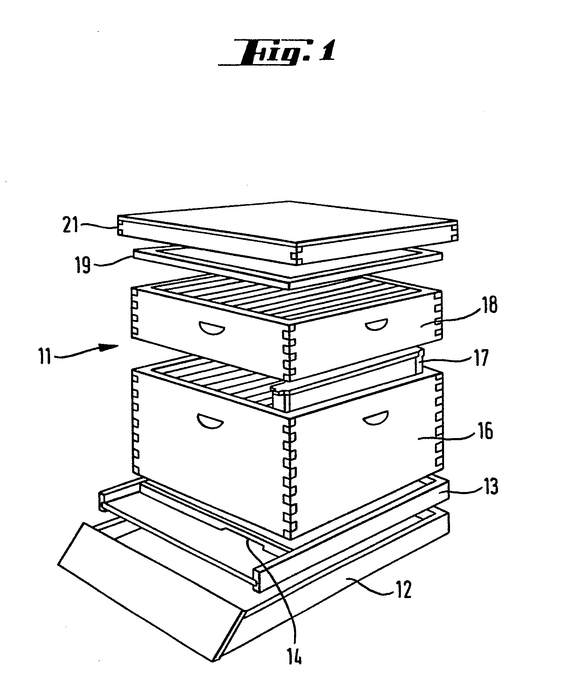

The typical prior art beehive 11 shown in Fig. 1 comprises a hive stand 12. Immediately above the hive stand is a bottom board on floor

- 8 -

0071409

unit 13. The bottom board and floor unit provides the entranceway at 14 for the bees to enter the hive body 16. The hive body 16 contains the honeycombs such as the honeycomb 17. Immediately above the hive body is shown an extracting super 18 used for storing honey. In place of the extracting super or thereabove a brooding chamber can be mounted. The brooding chamber has the same dimensions as the extracting super but contains brooding sections therein. Above the extracting super 18 is shown the inner cover 19 and the outer cover 21. The inner cover generally is a wooden crown board or a piece of strong coarse material such as canvas or sail cloth.

It has to be noted that the prior art beehives such as beehive 11 is built in layers one above the other. Thus for example the extracting super or the brooding chambers are mounted above the hive body and must be removed to provide access to the honeycombs. In addition the outer cover and the inner cover must also be removed to provide access to the honeycombs.

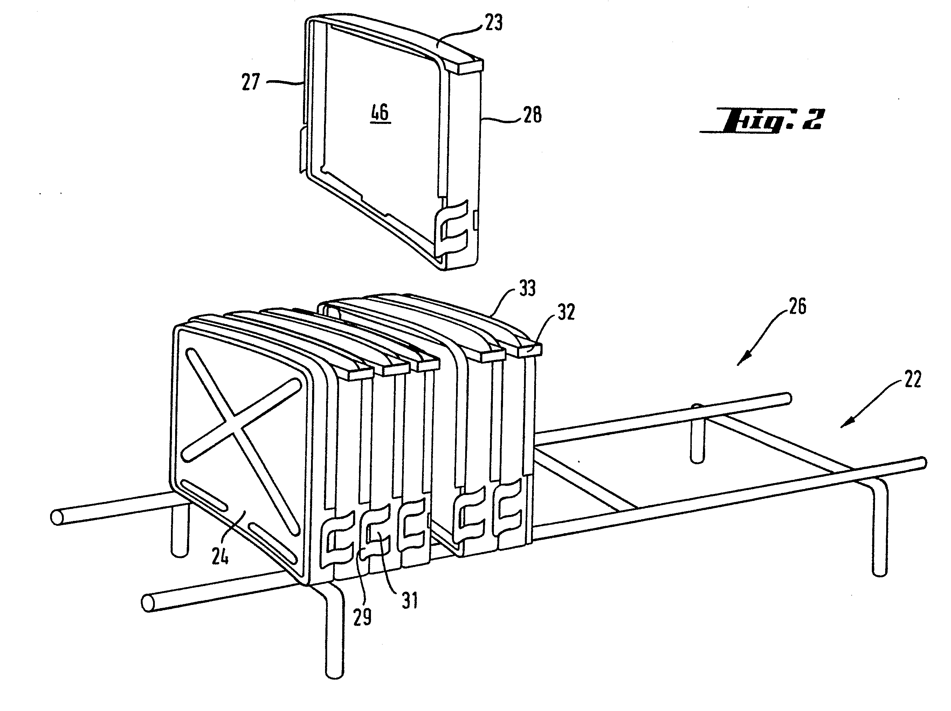

In the unique modular beehive generally shown at 22 in Fig. 2 note that the units making up the beehive such as honeycomb foundation unit 23 and end unit 24 stand vertically and are mounted side by side in a horizontal direction. Thus to obtain access to a honeycomb unit such as unit 23 it is not necessary to lift or remove any other units. The beehive is shown on a stand 26.

The honeycomb foundation units making up the beehive 22 have dual frames and overlappingly fit together because they each have a first external peripheral lip on one side that defines a first opening that has a relatively large circumference. The external lip is shown as lip 27. On the other side there is an internal peripheral lip 28 that fits into the first opening defined by the external lip on an adjoining section. In a preferred embodiment the external and internal lips only surround the top portions of the frames.

Each of the honeycomb foundation units thus overlap the subsequent unit and are clipped with clip means such as loop 29 and hook 31. The honeycomb foundation units are also equipped with a handle, such as handle 32, on each side for facilitating the movement of the units and for fitting the units into standard equipment for processing the honey.

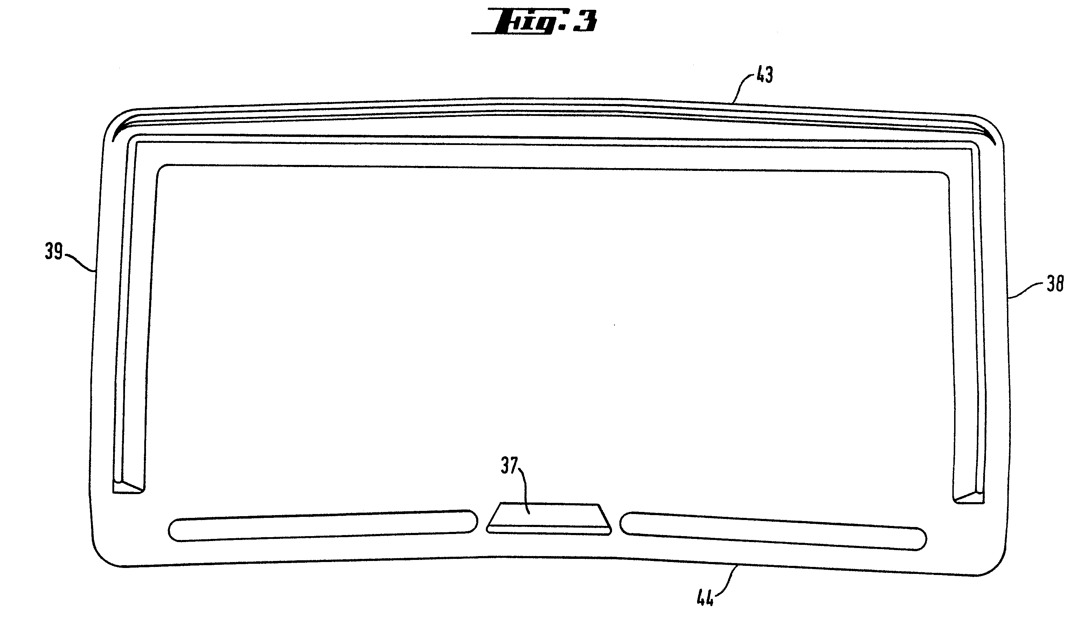

The end unit, such as unit 24, is shown in greater detail in Fig. 3 which is the front view of the end unit. The end unit 24 comprises a forward wall 34 and a rearward wall 36.

Entrance means to the hive are provided in the end unit. More particularly a tunnel 37 goes through the end unit. Access means are also provided to enable the bee access to the space between the walls of the end unit. Thus the end unit having the two wide walls 34 and 36 separated by the narrower walls 38 and 39 forms a food storage chamber 41. Access to the food storage chamber is provided through the passageway 42 in wall 36. A passage is provided on both wide walls when the end unit is used between honeycomb foundation units to divide a hive into separate sections. Similarly, entrances are provided through a tunnel extending from the side walls or the top of the end units where the end units are used to provide better access to the queen. Such entrances also enable pollen to be dropped in the queen's quarters rather than on the honeycombs.

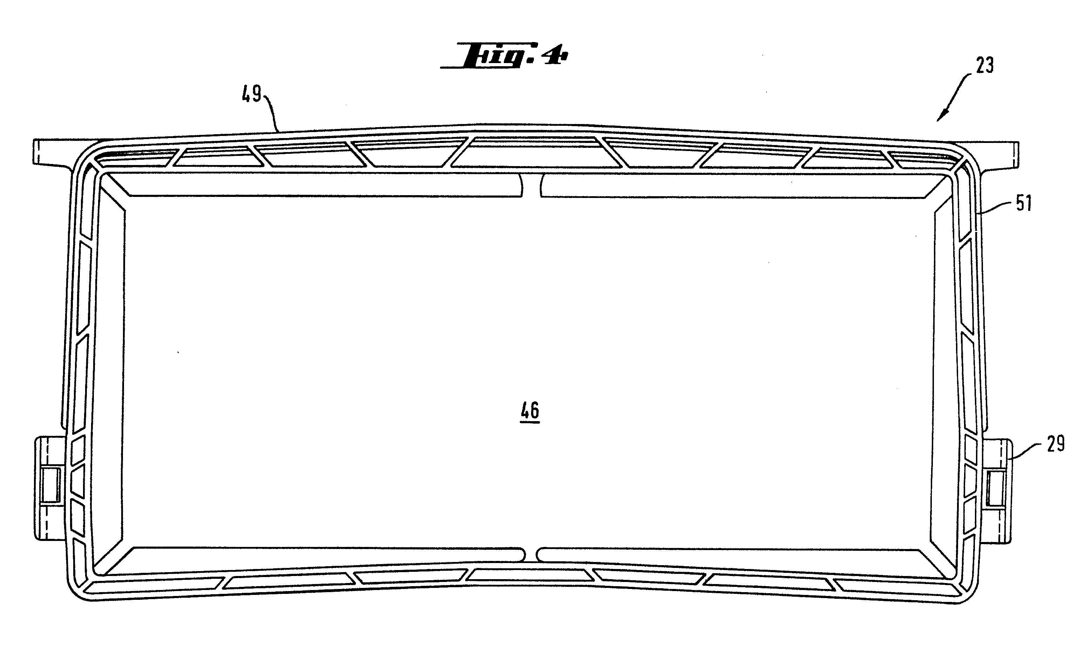

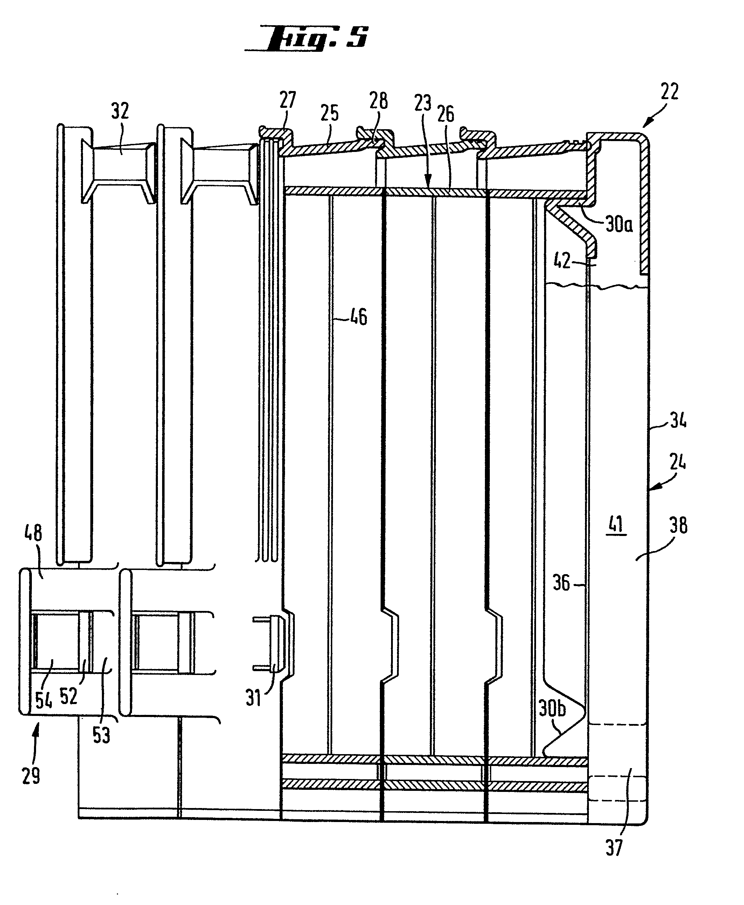

It should be noted that the top of the units such as top 43 is tapered from the center towards the sides thereby providing excellent drainage for the draining of rain water, for example. The bottom 44 of the end unit is characterized to better set on the stand unit. The shape of the bottom of the unit is the negative of the top of the unit to facilitate stacking during storage and transportation. In Figs. 4 and 5 the honeycomb foundation unit is shown in greater detail. The honeycomb foundation unit such as honeycomb foundation unit 23 basically comprises a dual frame; and, in a preferred embodiment the honeycomb foundation 46 is made integrally with the dual frame in the same molding process. The honeycomb foundation in a preferred embodiment has a matrixed honeycomb texture.

Means are provided for fastening the adjacent honeycomb units together in addition to the external and internal lips. More particularly each honeycomb foundation unit has a loop connector, such as loop connector 29 and a hook 31. The loop of one unit attaches to the hook of the subsequent unit. The loop connector such as loop 29 comprises a loop body 48 defining an aperture 52 and depending from a loop stem 53. The aperture has a tongue 54 extending therein and is designed to mesh with and lock the hook 31. The hook in one embodiment is generally a loop section extending from the side wall of the honeycomb foundation unit. The loop section is pulled over the hook and is held onto it by the tongue.

The dual frame comprises an outer section 25 and an inner section 26. The top of the frame 49 has a taper similar to that of the top 43 of the end unit for providing adequate drainage to help in maintaining the beehive weatherproof. To that end the lip sections 27 is provided around the one top peripheral side of the dual frame 23. The internal lip section 28 is on the opposite side of the honeycomb foundation unit. The internal lip 28 is pleated, in a preferred embodiment, to provide more resilience and to more adequately weatherproof the beehive.

The end unit 24 is dimensioned to snap into the lip 27 and is held to the honeycomb foundation unit by protrusions such as protrusions 30a and 30b which snap into the frame of the honeycomb foundation unit.

The beehive is assembled in accordance with the number of honeycomb sections desired or required for a particular task. For example where the beehive is used for honey gathering purposes primarily then there can be anywhere up to 40 honeycomb sections assembled between two end pieces. It is also known to utilize an end section as a dividing piece wherein access is provided to the food content internal to the end piece by having an entrane such as entrance 42 on the wall 34 also. The bees enter through tunnel 37 and depending on their size can traverse the entire 40 or so honeycombs. The queen bee however is kept between midsections made from the end sections by properly dimensioning the tunnel 37 as is well known to those skilled in the apiarian art.

When the beehive or sections of the beehive are used for brooding purposes that is to raise the queen bee, then of course there will be say two or three honeycomb sections between two end sections.

Another usage of the beehive is for spreading the pollen and in this case a small number of honeycomb foundation units can be used where the bees will come in to feed and the pollen is spread between the bees and onto the flowers and fruit and vegetables of the area. Similarly two end units and a single honeycomb foundation unit may be used to breed queens.

Thus an extremely versatile beehive is provided wherein the removal of the honeycomb by the apiarist is facilitated by the horizontal modular arrangement of the beehive. In addition, the beehive requires a minimum of maintenance, is lightweight, waterproof and has versatility of usage heretofore not found.

The modular beehive 111 of the embodiment shown in Fig. 6 comprises a modular roof assembly 112 fitted over a plurality of honeycomb foundation units such as honeycomb foundation unit 113. The foundation units are sandwiched between end units, such as end unit 114. The honeycomb foundation units include means for interconnecting the units together such as the lip 116 and groove 117 used for receiving a protrusion (not shown) on the lip 116. In addition the end units include loop means such as loop means 118 and 119 for receiving a cable therethrough for binding the modular beehives together. Note that no threaded fasteners are used and accordingly there is no problem in interconnecting or assembling more honeycomb foundation units between the end units. For each additional honeycomb foundation unit, another roof section is added. The roof sections interlock with each other and are clamped together between end unit bulkheads such as bulkhead 121 on end unit 114.

The end units are shown as including means for enabling the bees to enter and leave the hive. These means are shown as apertures 122 and 123. Means shown in Fig. 14 are provided for controlling the ingress and egress of the bees through the apertures 122 and 123. The passage of bees can be completely stopped or the bees can be permitted to leave the beehive but not to reenter. Thus the beehive can be transported with bee therein or it can be selectively emptied.

Means such as food bin 126 are provided for feeding the bees within the hive. The food bin 126 is designed to be assembled into the end unit 114. Means are provided for coupling together the food bin and the end unit. More particularly these means are shown as extended characterized flanges 127 and 128. The flanges 127 and 128 rest within the slots 129 and 131 respectively on the end unit 114. Note that when the flanges 128 and 127 are in the slots 129 and 131 then the shape of the side walls of the end unit matches the shape of the side walls of the honeycomb foundation units.

Means are provided to enable the bees to progress through the end unit to the honeycomb foundations. More particularly the entrance portals 122 and 123 are aligned with raised passageways 132 and 133 formed by upraised portions on the food bin 126. Thus the bees have passageways extending from the entrance portions 122 and 123 to the honeycomb foundation 134 of honeycomb foundation unit 113.

The honeycomb foundation unit 113 comprises the honeycomb foundation 134 surrounded by a double frame unit comprising an outer frame 136 and an inner frame 137. The top part of frames 136 and 137 are of a different width than the side and bottom parts of the frames, for example. Thus when two honeycomb foundation units 138 and 113 abut each other there is room, shown as space 139, therebetween. The top frame of outer frame 136 comprises a narrow beam section 141 terminating in two T sections with the cross member shown as cross member 142, for example. The outwardly extending cross members 142 on adjacent frames abut each other and thereby provide space 139 between the honeycomb foundation units.

The extensions of the longitudinal beam sections 141 provides flanges, such flanges 143 enables the honeycomb foundation units of this beehive to also be used in prior art type vertical beehives. The flanges are used for hanging the honeycomb foundation units in the prior art beehives.

In the modular horizontally extending beehives of the preferred embodiment of Fig. 6 the flange sections such as section 143 are used for joining the roof units, such as unit 144 of assembly 112 to the modular beehive. The roof units, such as roof unit 144, is a double framed unit having an outer surface 146 and an inner surface 147 separated by longitudinal bulkheads such as longitudinal bulkhead 148 and a transverse bulkhead shown as bulkhead 149. The inner surface 147 is characterized with an intermediate flat section terminating in a pair of step-like sections at each end. The steps are defined by short vertical sections such as vertical sections 151 leading to a smaller flat section 152, another vertical section 153 and the final flat section 154.

The outer surfaces such as surface 146 of the roof unit 144 are surrounded by a pair of

**0071409**

of spaced apart frame members 156 and 157. The outer surface 146 actually comprises a plurality of slanting surfaces with changing angles to the horizontal. The angles to the horizontal are designed to ensure that water and the like runs off the roof assembly.

The roof units are positioned on top of the honeycomb units and the end units. More particularly the small walls or rises of the step-like sections such as riser 153 abuts against a vertical portion 158 of flange 143. The step surface 152 is juxtaposed to and rests on the top of the longitudinal beam surface 141. There is a communication space, shown for example at 159, between surface 147 and beam surface 141. This space is used by the bees for communicating between honeycomb foundation units.

Similarly the step surface 152 of the roof unit rests on the top of the flanges 127 and 128 of the food bin. Communication spaces exist between surface 147 and the indentations 161, 162, 163 and 164 of the food bin 126. The indentations enable communication by the bees between the food in the food bin and the honeycomb foundation units.

Means are provided for separating honeycomb foundation units from each other. For example, a queen bee is kept in one unit it may be desirable to separate that unit and not enable the bees to travel through the unit. A honeyman mesh unit, shown as honeyman unit 166 is provided. Unit 166 comprises frame means 167 surrounding the mesh means 168 which is sized to prevent the bees from travelling therethrough. The frame means 167 are dimensioned to slip fit into space 139 between the honeycomb foundation units. The bottom of the frame 167 rests on the abutting bottom inner frames of the honeycomb foundation units while the top of the frame 167 is juxtaposed with the side of surface 147 to prevent communication in the space between surface 147 and the beam surface 141. The frame 167 can be dispensed with if the mesh means is made larger.

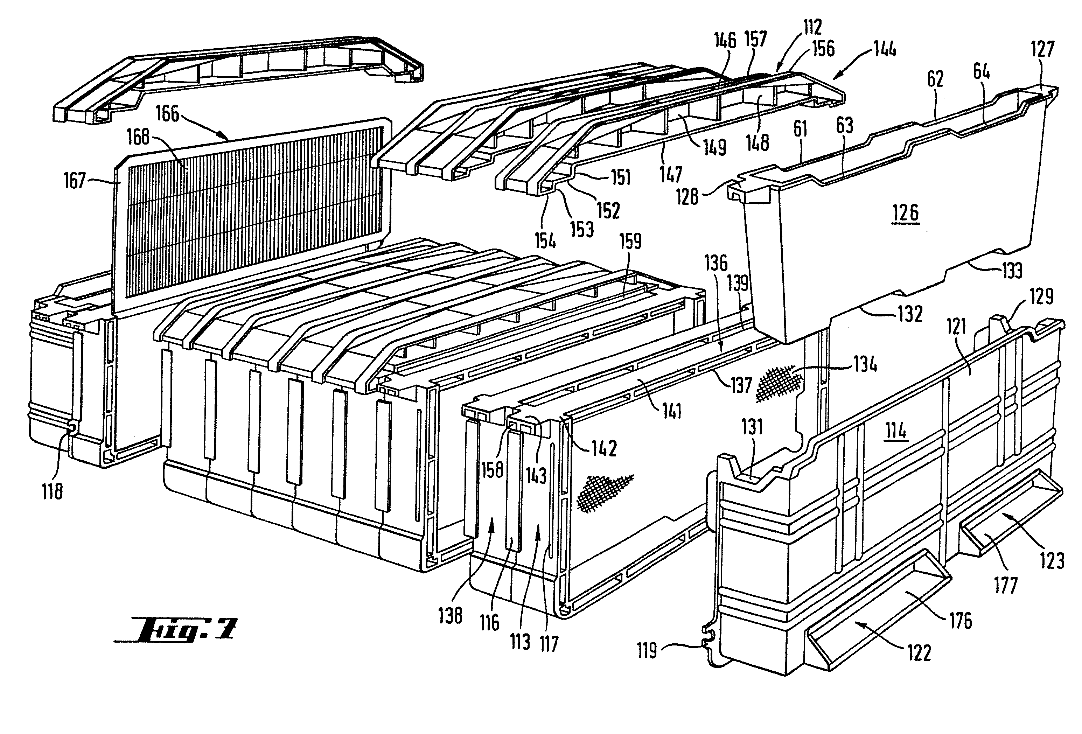

Figs. 8, 9 and 10 show an end unit assembled with the food bin therein and a honeycomb foundation unit attached. More particularly, for example, in Fig. 8 the end unit 114 is shown with a food bin 126 hung by its flanges, such as flange section 128 in the groove 131. The bulkhead portion 121 is shown as extending above the top of flange 128 to close the communication spaces, thereby shunting the bees to the portal openings 122 and 123. Flange 128 is on a level with flange 143 of the honeycomb unit 113.

Means are provided for coupling the end unit 114 to the honeycomb unit 113. More particularly bottom tabs such as tab 169 is shown attached to the bottom 171 of end unit 114 and extending outwardly therefrom to reach into the space 172 between the inner frame and outer frames of the honeycomb foundation unit 113.

The lip 116 is clearly seen as is the groove 117 for receiving the protrusion 175 on the lip 116.

Fig. 9 is a sectional view from the bottom portions of the combination of the combined units of Fig. 8. The bottom shelves 176 and 177 of openings 122 and 123 are seen as well as the front wall portion of the end unit 114. The food bin 126 rests on its flanges 127 and 128 in notches 129 and 131 in the side walls of the end unit 114. It is seen that there are a plurality of bottom tabs such as tab 169 for example and a pair of side tabs such as tab 173 extending from end unit 114. The tabs go into the space between the inner and outer frames of the honeycomb section. It is seen that the bottom tabs such as tab 169 from the bottom portion of the end unit.

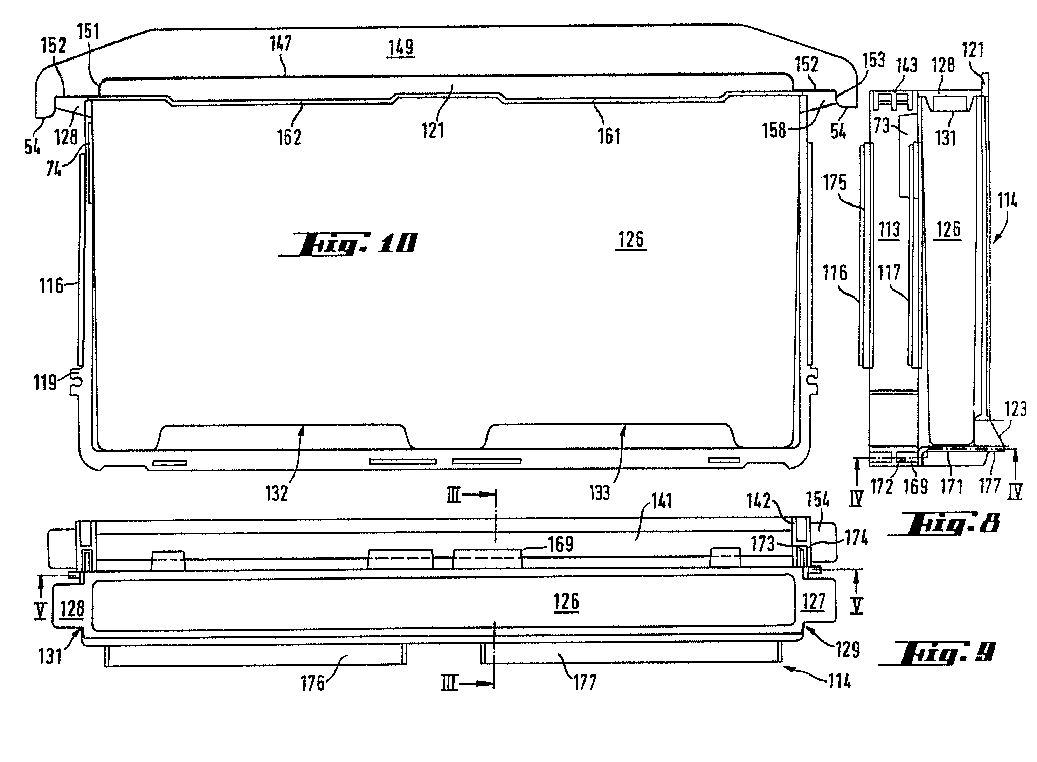

Fig. 10 is a sectional view taken along line √-√ of Fig. 9 and looking in the direction of the arrows √-√. It clearly shows the roof unit including the transverse bulkhead 49 assembled to the honeycomb foundation units and end sections.

The spaces between the indentations 161 and 162 of the feed bin 126 is stopped up by the bulkhead section 121 of the end unit 114. The bottom indentations 132 and 133 of the feed unit are clearly shown as providing communication space for the bees. The tab unit such as side tab unit 174 is also shown along with the lip unit 116. Note that in the honeycomb foundation unit the frame is regularly as wide as the cross-section 142. It is only along the top beam section 141 where it narrows down to provide communication and air circulation space between the honeycomb units.

Means are provided for interconnecting the roof units one to the other to make up the roof assembly. These means are shown as an overlapping of the frame portions 156 and 157. In a preferred embodiment however, prong and socket arrangements are also used in conjunction with the overlapping frame sections.

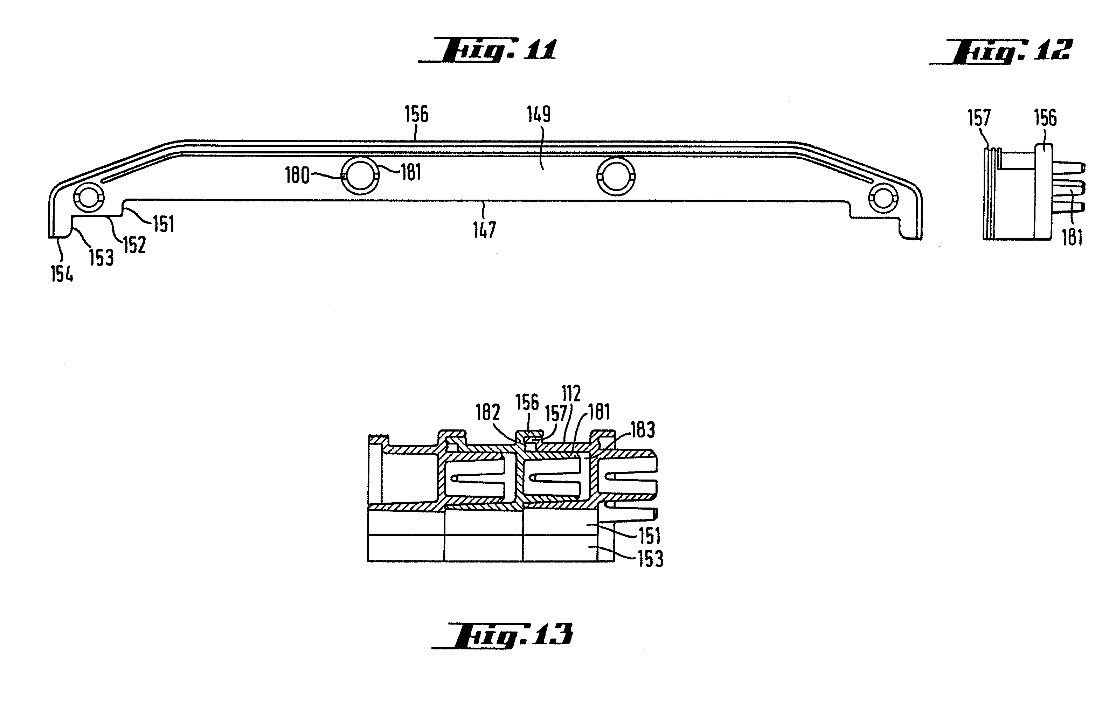

Fig. 11 shows a front view of a roof section using the prong and socket interconnecting arrangement. In Fig. 11 the transverse bulkhead 149 is shown as having prongs thereon such as prongs 181. The prongs are shown as split as at 180 to enhance the resiliency of the prongs. The frame portions are shown as the larger frame portion 156 into which a smaller frame portion 157 press fits.

Fig. 12 is a side view of the roof unit of Fig. 11. Therein the frame portion 156 is shown larger to receive the grooved smaller frame portion 157. The prongs, such as prong 181, are seen extending from the roof unit.

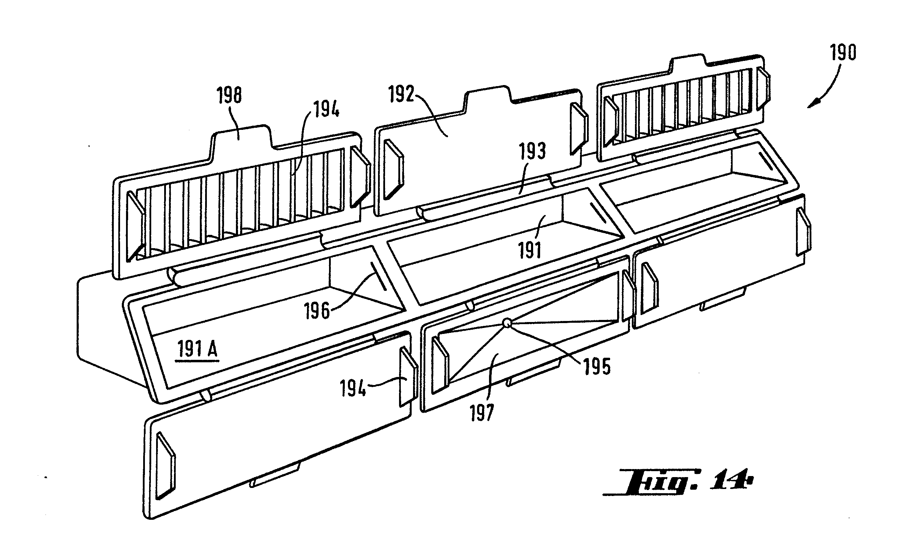

Fig. 13 shows a plurality of roof units interconnected into a roof assembly. Therein is clearly seen the larger frame section 156 surrounding a smaller frame section 157. Note that the frame section 157 has grooves thereon to aid in weatherproofing the connections. There is a slight protrusion 182 below the larger frame section 156 which is designed to fit underneath the smaller section 157.

The prongs such as prong 181 fits into a socket portion 183 of the roof unit 112. The riser sections 151 and 153 of the step-like sections are shown in Fig. 13. Thus, the roof units fit together in a watertight manner aiding in assembling the modular beehive into a watertight weather resistant unit.

The bee portal units or entrance and exit control units 190 of Fig. 14 which are designed to fit into opening 122 and 123 are shown as comprising a plurality of different passageways. A first passageway 191 is unobstructed. The passageway can be varied to stop bees by placing the closure lid 192 over the passageway by rotating the lid 192 around the integral hinge 193. Similarly a single bee exit lid 197 can be placed in the unobstructed passageway 191 or alternatively a grating lid 194 can be placed over the unobstructed passageway 191A. The grating lid is dimensioned to enable the passage of air but stops the passage of bees. The single bee exit lid 197 includes a pyramid-like section terminating in a hole 195 at the apex of the pyramid. The hole is sized to enable a single bee to pass therethrough. It has been found that bees will use the hole 195 for exiting from the hive but will not enter through hole 195. Thus lid 197 is useful for emptying bees from the hive or sections thereof.

The three-in-one unit 190 enables controlling the entrance and exit of the bees and also controlling the ventilation of the hives. The lids are held in place by means such as lid lips such as lip 199 which fits into and is held by slot 196. The lids are removed from the held position using handles, such as handle 198, for example.

In operation, the unique beehive is extendible horizontally, that is sections can be added in a horizontal manner. This makes it easy to remove any section such as an individual honeycomb foundation unit. In the roofed embodiment units are removed by unclipping the roof and removing the particular honeycomb foundation section which may then be placed in a centrifuge unit to remove the honey and then replaced in the hive.

The bees can be removed from the hive prior to removal of the individual sections using the bee portal unit 190 shown particularly in Fig. 14. Thus, for example, the day prior to the removal of the individual sections for removal of honey therefrom, portal units 190 are placed in the openings 122 and 123. The lid 197 is used in conjunction with opening 191 while the closure lids cover the other openings. The bees can come out but not reenter through the lids 197 by passing through the hole 195.

Ventilation to the beehive can be regulated using the grating lid shown at 194, for example. The hive can be completely closed for transportation purposes, for example using lids such as lid 192.

The roof is easily replaced by assembling it onto the modular honeycomb foundation units and end units. The beehive can be expanded at will. The queen bee can be isolated at will using the honeyman by merely slipping it in after roof sections are removed and then replacing the removed roof sections. The roof can be constructed as previously described so that either individual sections can be removed or the prong and socket units can be used whereby multiple sections are removed simultaneously. Thus an extremely efficient beehive is supplied that is weather resistant, attractive and much more conducive to use by bees.

While the principles of the invention have been described above in connection with specific apparatus and applications, it is to be understood that this description is made by way of example only and not as a limitation on the scope of the invention.

CLAIMS:

1. A beehive for facilitating the work of apiarists, in which said hive comprises, a honeycomb foundation unit including frame means and honeycomb foundation means supported by the frame means, said frame means comprising spaced apart inner and outer frame sections, a plurality of hive end units, and coupling means for coupling the honeycomb foundation unit between two end units to form an element resistant modular beehive in which the coupled units extend side by side in a horizontal direction.

2. A beehive as claimed in Claim 1, wherein said coupling means comprises an outer lip on one side of the frame means and an inner lip on the opposite side of the frame means whereby the frames of adjacent honeycomb foundation units overlappingly fit together to provide a substantially watertight beehive.

3. A beehive as claimed in Claim 2, wherein the outer frame sections slope from the midpoint to the ends at the tops thereof to better facilitate drainage of rain water and the like.

4. A beehive as claimed in Claim 1, wherein the end units include protrusions extending therefrom, which protrusions are dimensioned to press-fit within the inner frame sections of the frame means and wherein one of the end units is located in the hive between honeycomb foundation units for dividing said hive into two sections.

5. A beehive as claimed in Claim 1, wherein the honeycomb foundation means is integral with the frame means, the honeycomb foundation units have passages through which bees can move and fasteners on each unit to aid interconnection and fastening together of the units, and wherein the outer frame comprises an outer lip at one end thereof and an inner lip at the other end thereof dimensioned to fit within the outer lip, the inner lip including serrated sections effective to increase resiliency and weatherproofing.

6. A beehive as claimed in Claim 1, wherein the coupling means comprises modular roof means and the top portion of the inner and outer frame means is narrower than the remaining portions of the frame means whereby a space is maintained between abutting honeycomb foundation units, the end units include food storage means which form a surface for the modular roof means that is geometrically identical to the roof surface of the honeycomb foundation units, the modular roof means comprises modular units, each having an outer lip on one side and an inner lip on the other side for fitting within an outer lip of the next adjacent modular unit in a watertight fashion, the individual modular units being interconnected by prong and socket means, and wherein the coupling means comprises an outer lip on one side of the frame means, the outer lip having protrusions thereon, and a groove on the other side of the frame for receiving the protrusions.

7. A beehive as claimed in Claim 6, wherein the honeycomb foundation means fit into the space between the upper frames of the honeycomb foundation units to isolate selected honeycomb foundation units.

8. A beehive as claimed in Claim 1, wherein portals are provided in the end units for enabling the egress and ingress of bees and wherein portal control means are provided for controlling the egress and ingress of bees.

9. A beehive as claimed in Claim 8, wherein the portal control means enables the control of the ventilation of the beehives through the egress and ingress openings.

10. A beehive as claimed in Claim 8 or 9, wherein the portal control means enables the bees to exit but not to enter.

# Fig. 1

Fig. 2

Fig.3

**Fig. 4**

23

49

51

29

46

# Fig. 5

Fig. 6

Fig. 7

7/10

0071409

*Fig. 10*

*Fig. 8*

*Fig. 9*

# Fig. 11

156    149

180    181

147

151

152

153

154

# Fig. 12

157    156

181

182    156    112
       157    181

183

151

153

# Fig. 13

0071409

Fig. 14.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A ·· | US - A - 3 704 471 (W.B. BIELBY)<br>* claim 1; column 1, lines 24 to 64; fig. 1 *<br>--- | 8,9 | A 01 K 47/00 |
| A | US - A - 3 071 784 (H.S. KOLB)<br>* column 5, line 74 to column 6, line 19; fig. 9 *<br>-- | 10 | |
| A | US - A - 4 234 985 (P.W. PIERCE)<br>-- | | **TECHNICAL FIELDS SEARCHED (Int.Cl. 3)** |
| A | FR - A1 - 2 452 246 (P. CALMELS)<br>-- | | |
| A | DE - A1 - 2 558 193 (N. VIAL et al.)<br>---- | | A 01 K 47/00 |

X | The present search report has been drawn up for all claims

| Place of search | Date of completion of the search | Examiner |
|---|---|---|
| Berlin | 15-09-1982 | BERGZOLL |

EPO Form 1503.1 06.78